# EUROPÄISCHE PATENTSCHRIFT

(11) **EP 1 125 355 B1**
(45) Veröffentlichungstag und Bekanntmachung des Hinweises auf die Patenterteilung: **27.11.2002**
(21) Anmeldenummer: 99971591.5
(22) Anmeldetag: 26.10.1999
(51) Int. Cl.: H02M 7/00

(54) **KONDENSATORBAUGRUPPE FÜR EIN STROMRICHTERGERÄT**
CAPACITOR MODULE FOR A CONVERTER
UNITE CONDENSATEUR POUR UN CONVERTISSEUR

(30) Priorität: 29.10.1998 DE 19849858
(43) Veröffentlichungstag der Anmeldung: 22.08.2001
(73) Patentinhaber: DaimlerChrysler AG, 70546 Stuttgart (DE)
(72) Erfinder: DRABON, Rodscha, D-68535 Neckarhausen (DE); ZENGERLE, Manfred, D-67280 Ebertsheim (DE); SCHOLTEN, Johannes, D-67283 Obrigheim (DE)
(74) Vertreter: Akers, Noel James
(86) Internationale Anmeldenummer: EP9908089
(87) Internationale Veröffentlichungsnummer: WO00027020

(56) Entgegenhaltungen:
- DE-A- 4 412 407
- DE-A- 19 628 549
- US-A- 5 729 450

## Beschreibung

Die Erfindung bezieht sich auf eine Stromrichtergerät-Kondensatorbaugruppe, welche mindestens einen Kondensator aufweist und mittels seitlicher mechanischer Halterungen an einem Grundrahmen des Stromrichtergerätes oder einem Kühlkörper befestigbar ist.

In der deutschen Patentanmeldung P198 13 365.0 ist eine Kondensatorbaugruppe für ein Stromrichtergerät vorgeschlagen worden, bei der ein mit dem Kühler der Leistungshalbleiter unmittelbar verbundenes, zentrales, metallenes Multifunktionsgehäuseteil thermisch kontaktierend mit den Kondensatoren verbunden ist. Oberhalb der Kondensatoren befinden sich die Treiberschaltungen für die Leistungshalbleiter sowie die Steuer- und Regelanordnung des Stromrichtergerätes. Diese Komponenten sind über hierzu erforderliche Befestigungseinrichtungen mit dem Multifunktionsgehäuseteil verbunden. Das Multifunktionsgehäuseteil kann mit oder ohne Leistungsverschienung ausgebildet werden.

Aus der DE 196 28 549 A1 ist ein Baukastensystem zur Bildung von Stromrichtergeräten unterschiedlicher Leistung und Kühlungsart bekannt. Dabei sind eine Vielzahl von einzelnen Kondensatoren zu Kondensator-Gruppen zusammengefaßt und über Haltebleche am Kühler des Stromrichtergerätes befestigt.

Aus der DE 44 12 407 A1 ist eine Schaltungsanordnung für den Betrieb mindestens eines batteriebetriebenen Elektromotors in einem Flurförderzeug bekannt. Dabei ist mindestens eine Reihe von Kondensatoren auf einem Trägerkörper angeordnet, welcher mit dem Kühler eines Stromrichtergerätes verbunden ist.

Aus der US 5 729 450 ist ein Leistungs-Stromrichter mit Kondensator-Baugruppe bekannt. Dabei sind eine Vielzahl von einzelnen Kondensatoren mittels seitlicher Haltebleche am Rahmen des Stromrichters befestigt. Die an den Frontseiten der Kondensatoren angeordneten Elektroanschlüsse sind mit Stromschienen verbunden.

Der Erfindung liegt die Aufgabe zugrunde, eine Stromrichtergerät-Kondensatorbaugruppe anzugeben, die einen äußerst kompakten Aufbau des Stromrichtergerätes ermöglicht.

Diese Aufgabe wird durch eine Stromrichtergerät-Kondensatorbaugruppe gelöst, welche als tragende Komponente des Stromrichtergerätes ausgestaltet ist und mindestens eine frontseitige oder seitliche mechanische Elektroanschluß- und Meßsensor-Halterung zur Kontaktierung mit externen Leistungsanschlüssen, wie Energieversorgung und Lastanschlüsse aufweist.

Die mit der Erfindung erzielbaren Vorteile bestehen insbesondere darin, daß mit der vorgeschlagenen Stromrichtergerät-Kondensatorbaugruppe der raumsparende, gewichtsreduzierte und kostenreduzierte Aufbau eines Stromrichtergerätes realisierbar ist. Da die Stromrichtergerät-Kondensatorbaugruppe selbst als tragende Komponente des Stromrichtergerätes ausgestaltet ist, kann auf die bei Stromrichtergeräten allgemein üblichen mechanischen Trag- und Hilfsrahmen völlig verzichtet werden. Ein weiterer Vorteil ist darin zu sehen, daß die Stromrichtergerät-Kondensatorbaugruppe recyclinggerecht zerlegbar ist.

Eine vorteilhafte Ausgestaltung der Erfindung besteht darin, daß an der frontseitigen mechanischen Halterung mindestens eine elektronische Schaltung - vorzugsweise eine Ansteuerschaltung für Leistungshalbleiter - befestigt ist. Diese Ausbildung unterstützt das Anliegen der Erfindung, einen möglichst kompakten Aufbau der Kondensatorbaugruppe zu ermöglichen.

Die mechanische Halterung kann frontseitig oder seitlich bezüglich des Kondensators angeordnet sein. Entsprechend den räumlichen Vorgaben kann es hierbei von Vorteil sein, daß mehrere Einzelhalterungen seitlich am Kondensator vorgesehen sind. Auf diese Weise kann die erfindungsgemäße Stromrichtergerät-Kondensatorbaugruppe bei einer Vielzahl von räumlichen Vorgaben zum Einsatz gelangen.

Die Erfindung wird nachstehend anhand der in der Zeichnung dargestellten Ausführungsbeispiele näher erläutert. Es zeigen:
- Fig. 1: eine perspektivische Ansicht einer erfmdungsgemäßen Kondensatorbaugruppe,
- Fig. 2: eine Sicht auf die Frontseite eines mit der erfindungsgemäßen Kondensatorbaugruppe bestückten Stromrichtergerätes,
- Fig. 3: eine Sicht auf eine Seitenfläche eines mit der erfindungsgemäßen Kondensatorbaugruppe bestückten Stromrichtergerätes und
- Fig. 4: eine perspektivische Ansicht einer weiteren Ausführungsform der erfindungsgemäßen Kondensatorbaugruppe.

### - Fortsetzung auf Seite 3 der ursprünglichen Beschreibung -

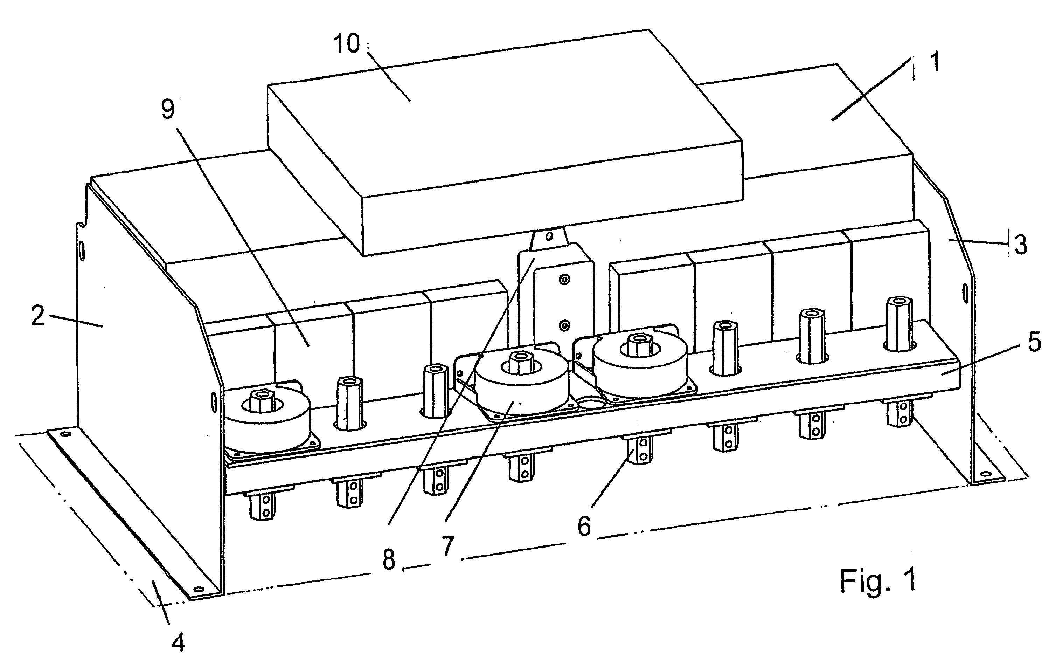

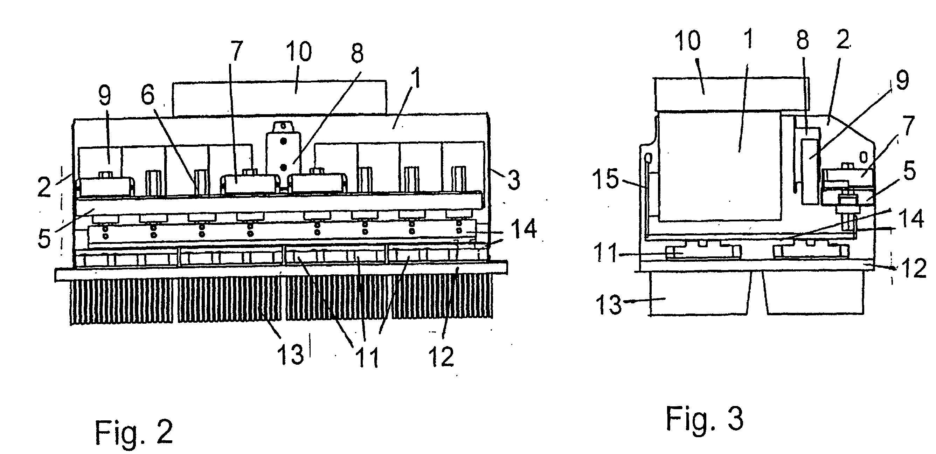

In Fig. 1 ist eine perspektivische Ansicht einer Kondensatorbaugruppe gezeigt. Es ist ein kubus- oder quaderförmiger Kondensator 1 zu erkennen, der an zwei sich gegenüberliegenden Seitenflächen mit seitlichen mechanischen Halterungen 2, 3 verbunden ist. Der Kondensator kann einstückig ausgebildet sein, es ist jedoch auch möglich, mehrere einzelne Kondensatoren kleinerer Kapazität zum Kondensator gewünschter Kapazität zusammenzufassen. Die beiden seitlichen mechanischen Halterungen 2, 3 dienen zur Montage der Kondensatorbaugruppe auf einem Grundrahmen 4, beispielsweise auf einem Kühlkörper (siehe Ziffer 12 gemäß Fig. 2 und 3). Der Kondensator 1 weist eine weitere, sich auf einer zwischen den mechanischen Halterungen 2, 3 befindlichen Seite - nachfolgend als Frontseite bezeichnet - erstreckende frontseitige mechanische Halterung 5 auf.

Die frontseitige mechanische Halterung 5 der Kondensatorbaugruppe dient zur Befestigung von elektrischen Anschlüssen 6 (Wechselspannungsanschlüsse, Gleichspannungsanschlüsse) des Stromrichtergerätes und zur Befestigung von Meßsensoren, insbesondere von drei Stromwandlern 7 und einem Spannungswandler 8. Des weiteren sind mehrere elektronische Schaltungen 9 an der frontseitigen mechanischen Halterung 5 befestigt. Bei diesen elektronischen Schaltungen 9 handelt es sich um Ansteuerschaltungen für die Leistungshalbleiter des Stromrichtergerätes.

An der Oberseite der Kondensatorbaugruppe bzw. des Kondensators 1 ist eine weitere, flach ausgebildete elektronische Schaltung 10 befestigt, wobei es sich um die Steuer- und Regeleinrichtung für die Ansteuerung der Leistungshalbleiter handelt.

In Fig. 2 ist eine Sicht auf die Frontseite eines mit der Kondensatorbaugruppe bestückten Stromrichtergerätes gezeigt. Es ist zu erkennen, daß der Kondensator 1 über die beiden seitlichen mechanischen Halterungen 2, 3 auf einen eine Vielzahl von nebeneinander angeordneten Leistungshalbleitern 11 tragenden Kühlkörper 12 montiert ist. Dabei handelt es sich im Ausführungsbeispiel um einen mit Kühllamellen 13 bestückten, für Luftkühlung geeigneten Kühlkörper 12. Selbstverständlich sind auch Flüssigkeitskühlkörper einsetzbar.

Die auf der frontseitigen mechanischen Halterung 5 montierten elektrischen Anschlüsse 6 und Stromwandler 7 sind zur Kontaktierung mit externen Leistungsanschlüssen (Energieversorgung, Lastanschlüsse), üblicherweise Kabelanschlüsse, an ihrer Oberseite frei zugänglich und an ihrer Unterseite mit Anschlüssen eines geräteinternen Verschienungssystems 14 kontaktiert. Das Verschienungssystems 14 stellt die elektrischen Verbindungen zu den einzelnen Leistungshalbleitern 11 und über einen rückseitigen Kondensatoranschluß 15 (siehe Fig. 3) die elektrischen Verbindungen zum Kondensator 1 her.

In Fig. 3 ist eine Sicht auf eine Seitenfläche eines mit der Kondensatorbaugruppe bestückten Stromrichtergerätes gezeigt. Es sind der Kühlkörper 12 mit Kühllamellen 13, die in zwei Reihen auf dem Kühlkörper 12 montierten Leistungshalbleiter 11, der über die seitlichen mechanischen Halterungen 2,3 mit dem Kühlkörper 12 verbundene Kondensator 11, die frontseitige mechanische Halterung 5 mit einem daran befestigtem Stromwandler 7, das Verschienungssystem 14 und der rückseitige Kondensatoranschluß 15 gezeigt. Die seitliche mechanische Halterung 3 ist entfernt, um den Einblick in das Stromrichtergerät zu erlauben.

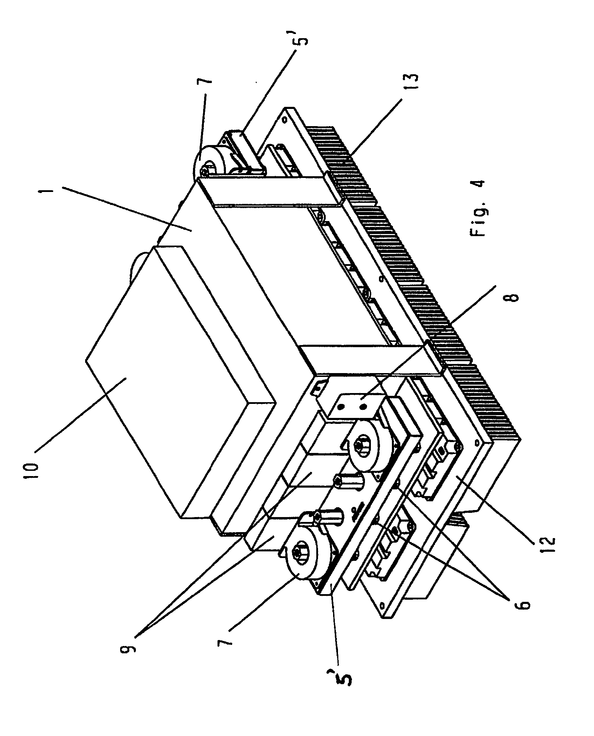

Fig. 4 zeigt eine gegenüber den Fig. 1 bis 3 abgewandelte Ausführungsform der erfindungsgemäßen Kondensatorbaugruppe. Anstelle der einstückigen frontseitigen Halterung 5 gemäß Fig. 1 bis 3 sind hierbei zwei Einzelhalterungen 5' vorgesehen. Auch sie dienen zur Aufnahme der elektrischen Anschlüsse 6, von Meßsensoren, wie Stromwandlern 7, und einem Spannungswandler. Im Bereich dieser Einzelhalterungen 5' sind des weiteren elektronische Schaltungen 9 vorhanden.

### Bezugszeichenliste

- 1: Kondensator
- 2: seitliche mechanische Halterung
- 3: seitliche mechanische Halterung
- 4: Grundrahmen
- 5: frontseitige mechanische Halterung
- 6: elektrischer Anschluß
- 7: Stromwandler
- 8: Spannungswandler
- 9: elektronische Schaltung (Ansteuerschaltung für Leistungshalbleiter)
- 10: elektronische Schaltung (Steuer- und Regeleinrichtung)
- 11: Leistungshalbleiter
- 12: Kühlkörper
- 13: Kühllamellen
- 14: Verschienungssystem
- 15: Kondensatoranschluß

## Patentansprüche

1. Stromrichtergerät-Kondensatorbaugruppe, welche mindestens einen Kondensator (1) aufweist und mittels seitlicher mechanischer Halterungen (2, 3) an einem Grundrahmen (4) des Stromrichtergerätes oder einem Kühlkörper (12) befestigbar ist, **dadurch gekennzeichnet, daß** die Stromrichtergerät-Kondensatorbaugruppe als tragende Komponente des Stromrichtergerätes ausgestaltet ist und mindestens eine frontseitige oder seitliche mechanische Elektroanschluß- und Meßsensor-Halterung (5) zur Kontaktierung mit externen Leistungsanschlüssen, wie Energieversorgung und Lastanschlüsse aufweist.

2. Stromrichtergerät-Kondensatorbaugruppe nach Anspruch 1, **dadurch gekennzeichnet, daß** an der frontseitigen mechanischen Halterung (5) mindestens eine elektronische Schaltung (9) - vorzugsweise eine Ansteuerschaltung für Leistungshalbleiter (11) - befestigt ist.

3. Kondensatorbaugruppe nach Anspruch 1 oder 2,
**dadurch gekennzeichnet, daß** die mechanische Halterung (5) frontseitig bezüglich des Kondensators (1) vorgesehen ist.

4. Kondensatorbaugruppe nach mindestens einem der Ansprüche 1 oder 2,
**dadurch gekennzeichnet, daß** die mechanische Halterung (5) zur Befestigung der elektrischen Anschlüsse seitlich am Kondensator (1) angeordnet ist.

5. Kondensatorbaugruppe nach Anspruch 4,
**dadurch gekennzeichnet, daß** mehrere Einzelhalterungen (5) seitlich am Kondensator (1) versehen sind.

## Claims

1. Converter appliance capacitor assembly, which has at least one capacitor (1) and can be attached by means of side mechanical holders (2, 3) to a base frame (4) of the converter appliance or a heat sink (12), **characterized in that** the converter appliance capacitor assembly is designed as a load-bearing component of the converter appliance and has at least one front or side mechanical electrical-terminal and measuring-sensor holder (5) for making contact with external power terminals, such as energy supply and load terminals.

2. Converter appliance capacitor assembly according to Claim 1, **characterized in that** at least one electronic circuit (9) - preferably a drive circuit for power semiconductors (11) - is attached to the front mechanical holder (5).

3. Capacitor assembly according to Claim 1 or 2, **characterized in that** the mechanical holder (5) is provided at the front with respect to the capacitor (1).

4. Capacitor assembly according to at least one of Claims 1 and 2, **characterized in that** the mechanical holder (5) is arranged at the side on the capacitor (1), for attachment of the electrical terminals.

5. Capacitor assembly according to Claim 4, **characterized in that** a number of individual holders (5) are provided at the side on the capacitor (1).

## Revendications

1. Unité de condensateur pour un convertisseur, présentant au moins un condensateur (1) et pouvant être fixée au moyen de fixations mécanique latérales (2, 3) sur un cadre de base (4) du convertisseur, ou à un corps réfrigérant (12), **caractérisée en ce que** l'unité de condensateur pour convertisseur est réalisée en tant que composant porteur du convertisseur et présente au moins une fixation avant ou latérale mécanique (5) pour une borne électrique ou un capteur de mesure, en vue de la mise en contact avec des bornes de puissance externes, telles qu'une alimentation énergétique et des bornes de charge.

2. Unité de condensateur pour un convertisseur selon la revendication 1, **caractérisée en ce qu'**au moins un circuit électronique (9) - de préférence un circuit d'attaque pour un semi-conducteur de puissance (11) est fixé sur la fixation mécanique avant (5).

3. Unité de condensateur selon la revendication 1 ou 2, **caractérisée en ce que** la fixation mécanique (5) est prévu du côté avant par rapport au condensateur (1).

4. Unité de condensateur selon au moins l'une des revendications 1 ou 2, **caractérisée en ce que** la fixation mécanique (5) est prévue latéralement sur le condensateur (1) pour fixer les bornes électriques.

5. Unité de condensateur selon la revendication 4, **caractérisée en ce que** plusieurs fixations individuelles (5) sont prévues latéralement sur le condensateur (1).
